# EUROPÄISCHE PATENTSCHRIFT

(11) **EP 3 526 274 B1**
(45) Veröffentlichungstag und Bekanntmachung des Hinweises auf die Patenterteilung: **03.08.2022**
(21) Anmeldenummer: 17791969.3
(22) Anmeldetag: 12.10.2017
(51) Int. Cl.: C08G 64/30

(54) **KATALYSATOR-SYSTEM**
CATALYST SYSTEM
SYSTÈME DE CATALYSEUR

(30) Priorität: 12.10.2016 DE 102016119477
(43) Veröffentlichungstag der Anmeldung: 21.08.2019
(73) Patentinhaber: EPC Engineering & Technologies GmbH, 99310 Arnstadt (DE)
(72) Erfinder: STRENG, Michael, 63477 Maintal (DE)
(74) Vertreter: Letzelter, Felix Phillip
(86) Internationale Anmeldenummer: PCT/EP2017/076010
(87) Internationale Veröffentlichungsnummer: WO 2018/069425

(56) Entgegenhaltungen:
- EP-A1- 0 807 657
- EP-A1- 0 987 285
- WO-A1-2016/151517
- WO-A2-2007/024425

## Beschreibung

Die vorliegende Erfindung betrifft ein Verfahren zur Herstellung eines Polycarbonats durch Reaktion eines oder mehrerer Diarylcarbonate mit einem oder mehreren aromatischen Hydroxyverbindungen, wobei in den Verfahren eine Katalysatorkombination eingesetzt wird. Darüber hinaus betrifft die vorliegende Erfindung eine Katalysatorkombination und die Verwendung einer solchen Katalysatorkombination in einem Verfahren zur Herstellung von Polycarbonat.

Aromatisches Polycarbonat ist aufgrund seiner guten mechanischen und optischen Eigenschaften ein wirtschaftlich interessanter Kunststoff mit zahlreichen Anwendungen. Anwendungen finden sich z.B. in der Automobilbranche, in der Medizintechnik sowie der Verpackungsindustrie und vielen weiteren mehr.

Die Herstellung von aromatischem Polycarbonat in industriellem Maßstab wird heutzutage entweder durch ein Oberflächenverfahren oder durch ein Schmelzeverfahren realisiert.

Im sog. Oberflächenverfahren wird ein aromatisches Hydroxyl mit Phosgen, einer wässrigen Lauge und einem Lösungsmittel durch Zugabe von einem Katalysator zu Polycarbonat umgesetzt. Das in der Lösung anfallende Polycarbonat wird anschließend in mehreren Reinigungsschritten konzentriert.

Im Schmelzeverfahren wird mindestens eine aromatische Hydroxyverbindung, bevorzugt Bisphenol A, mit mindestens einem Diarylcarbonat, bevorzugt Diphenylcarbonat, zu Polycarbonat zur Reaktion gebracht. Hierfür werden die flüssigen Rohstoffströme vermischt und unter Zugabe von Katalysatoren bei erhöhter Temperatur und reduziertem Druck zu Polycarbonat umgesetzt.

Die Herstellung von Polycarbonaten nach dem genannten Schmelzumesterungsverfahren ist bekannt und beispielsweise beschrieben in "Schnell", Chemistry and Physics of Polycarbonats, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymere Science and Engineering, Vol. 11, Second Edition, 1988, Seiten 648-718 und schließlich in Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299.

Die bei der Herstellung von Polycarbonaten aus Bisphenolen und Diarylcarbonaten ablaufende Reaktion wird durch die folgende Gleichung wiedergegeben:

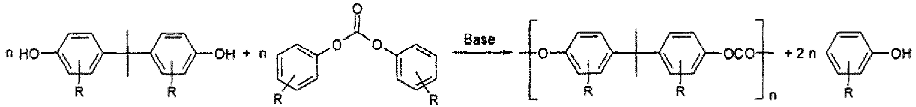

Aufgrund der geringeren Abwassermenge und dem nicht Bedarf von toxischem Phosgen wird das Schmelzeverfahren heutzutage vermehrt angewendet.

Es ist allerdings für das Schmelzeverfahren von größter Bedeutung, hoch reine Rohstoffe und ein geeignetes Katalysatorsystem zu verwenden, um ein qualitativ hochwertiges Polycarbonat herstellen zu können.

Ein hochwertiges Polycarbonat besteht hauptsächlich aus linearen Ketten einer gewünschten Kettenlänge. Abweichung von der linearen Kettenstruktur und/oder einer größeren Polydisperistät (Mw/Mn) führen zu veränderten mechanischen und insbesondere rheologischen Eigenschaften, die sich in der Weiterverarbeitung negativ auswirken können.

Es ist daher von größter Bedeutung ein geeignetes Katalysatorsystem zu verwenden, welches sowohl eine optimale Reaktionsgeschwindigkeit gewährleistet, als auch einen hohen Umsatzgrad ermöglicht und eine hohe Selektivität besitzt, um ein hochwertiges Polycarbonat herzustellen.

Aufgrund der mehr als 30 jährigen industriellen Produktion von aromatischem Polycarbonat durch das Schmelzeverfahren existieren zahlreiche verschiedene Lösungsansätze hierfür.

Es ist allgemein bekannt das Erdalkali- und Alkalimetalle als Katalysatoren im Schmelzeverfahren verwendet werden und deaktiviert werden müssen (US302272).

In EP0435124 ist die Verwendung von Alkali-Salzen und Stickstoff-Verbindungen als Katalysatoren im Schmelzeverfahren und eine anschließende Zugabe einer Säure beschrieben.

In US3442854 und WO 2007/024425 ist die Verwendung von quartären Stickstoff- und Phosphorverbindungen als Transesterifikationskatalysatoren beschrieben.

Nachteilig an den bisherigen Lösungsansätzen ist, dass die richtige Katalysatorwahl stark von dem gewählten Verfahren bzw. dem Aufbau des Verfahrens abhängt.

Nachteilig an den bisherigen Verfahren ist es des Weiteren, dass noch keine optimale Balance zwischen einer möglichst vollständigen Umsetzung der Edukte zum Polycarbonat, einer möglichst geringen Bildung von Nebenprodukten und einer möglichst hohen Stabilität des Endproduktes gefunden wurde.

Der vorliegenden Erfindung lag die Aufgabe zugrunde, die genannten Nachteile der Verfahren nach dem Stand der Technik zu überwinden.

Diese Aufgabe wird erfindungsgemäß gelöst durch ein Verfahren zur Herstellung eines Polycarbonats gemäß Anspruch 1 durch Reaktion eines oder mehrerer Diarylcarbonate mit einem oder mehreren aromatischen Hydroxyverbindungen, wobei in dem Verfahren eine Katalysatorkombination eingesetzt wird, die umfasst: eine erste Komponente (Komponente 1), umfassend eine oder mehrere quartäre Stickstoffverbindungen, eine zweite Komponente (Komponente 2), umfassend eine oder mehrere quartäre Phosphorverbindungen, eine dritte Komponente (Komponente 3), umfassend eine oder mehrere Alkalimetallverbindungen und eine vierte Komponente (Komponente 4), umfassend eine oder mehrere schwefelhaltige organischen Verbindung.

Überraschenderweise wurde festgestellt, dass diese spezifische Kombination von quartären Stickstoffverbindungen, quartären Phosphorverbindungen, Alkalimetallverbindungen und einer schwefelhaltigen organischen Verbindung zu einer sehr effizienten und wirtschaftlichen Umsetzung der Edukte zum Polycarbonat von hoher Qualität und gleichzeitig zu einer hohen Stabilität des gebildeten Polycarbonats führen.

In einer besonders bevorzugten Ausführungsform ist das erfindungsgemäße Verfahren so ausgestaltet, dass die erste Komponente eine oder mehrere quartäre Stickstoffverbindungen mit dem allgemeinen Aufbau [(R)₄-N]⁺ [X]⁻ umfasst, wobei R für voneinander unabhängige gleiche oder verschiedene Alky- und oder Aryl-gruppen steht und X- anorganische oder organische Anionen umfasst, insbesondere Hydroxid, Sulfat, Carbonat, Formiat, Benzoat, Phenolat, wobei die erste Komponente insbesondere eine oder mehrere der folgenden Verbindungen umfasst: Tetramethylammoniumhydroxid, Tetraethylammoniumhydroxid, Tetrabutylammoniumhydroxid, Tetramethylammoniumformiat, Tetraethylammoniumformiat, Tetrabutylammoniumformiat, Tetramethylammoniumacetat, Tetraethylammoniumacetat, Tetrabutylammoniumacetat, Tetramethylammoniumfluorid, Tetraethylammoniumfluorid, Tetrabutylammoniumfluorid.

In einer besonders bevorzugten Ausführungsform umfasst die erste Komponente Tetraethylammoniumhydroxid.

In einer weiteren bevorzugten Ausführungsform ist das erfindungsgemäße Verfahren so ausgestaltet, dass die zweite Komponente eine oder mehrere quartäre Phosphorverbindungen mit dem allgemeinen Aufbau [(R)₄-P]⁺ [X]⁻ umfasst, wobei R für voneinander unabhängige gleiche oder verschiedene Alky- und oder Aryl-gruppen steht und X- anorganische oder organische Anionen umfasst, insbesondere Hydroxid, Sulfat, Carbonat, Formiat, Benzoat, Phenolat, wobei die zweite Komponente insbesondere eine oder mehrere der folgenden Verbindungen umfasst: Tetramethylphosphoniumhydroxid, Tetramethylphosphoniumformiat, Tetramethylphosphoniumacetat, Tetramethylphosphoniumbenzoat, Tetraethylphosphoniumhydroxid, Tetraethylphosphoniumformiat, Tetraethylphosphoniumacetat, Tetrethylphosphoniumbenzoat, Tetrabutylphosphoniumhydroxid, Tetrabutylphosphoniumacetat, Tetrabutylphosphponiumbenzoat, Tetraphenylphosphoniumhydroxid, Tetraphenylphosphoniumacetat, Tetraphenylphosphoniumphenolat, Tetrabutylphosphoniumacetat, Tetramethylphosphonium-tetraphenylborhydrid, Tetraphenylphosphoniumbromid, Tetraphenylphosphonium-tetraphenylboranat, Tetra-(p-tert.-butylphenyl)-phosphonium diphenyl phosphat, Triphenylbutylphosphoniumphenolat, Triphenylbutylphosphoniumtetraphenylboranat, Tetraphenylphosphoniumchlorid, Tetraphenylphosphoniumfluorid.

In einer besonders bevorzugten Ausführungsform umfasst die zweite Komponente Tetraphenylphosphoniumphenolat.

In einer weiteren bevorzugten Ausführungsform ist das erfindungsgemäße Verfahren so ausgestaltet, dass die dritte Komponente eine oder mehrere Alkalimetallverbindungen umfasst: Alkalimetallhydroxid, -carboxylsäuren und deren Salze sowie in Form von nicht flüchtigen organischen und inorganischen Säuren und deren Salzen, Alkalimetallphosphate, -phosphit, -sulfat, wobei die dritte Komponente insbesondere eine oder mehrere der folgenden Verbindungen umfasst: Natriumhydroxid, Kaliumhydroxid, Lithiumhydroxid, Natriumacetat, Kaliumacetat, Lithiumacetat, Natriumcarbonat, Kaliumcarbonat, Lithiumcarbonat, Natriumbicarbonat, Kaliumbicarbonat, Lithiumbicarbonat, Natriummethanolat, Kaliummethanolat, Lithiummethanolat, Natriumethanolat, Kaliumethanolat, Lithiumethanolat, Natriumstearat, Kaliumstearat, Lithiumstearat, Natriumphenolat, Kaliumphenolat, Lithiumphenolat, Natrium-bis-phenolat, Kalium-bis-phenolat, Lithium-bis-phenolat, Di-Natrium-bis-phenolat, Di-Kalium-bis-phenolat, Di-Lithium-bis-phenolat, Natriumbenzoat, Kaliumbenzoat, Lithiumbenzoat, Natriumborhydrid, Kaliumborhydrid, Lithiumborhydrid, Natriumamid, Kaliumamid, Lithiumamid, Natriumphosphat, Di-Natriumhydrogenphosphat, Natriumdihydrogenphosphat, Kaliumphosphat, Di-Kaliumhydrogenphosphat, Kaliumdihydrogenphosphat, Lithiumphosphat, Di-Lithiumhydrogenphosphat, Lithiumdihydrogenphosphat, Natriumsulfat, Natriumhydrogensulfat, Natrium-Kaliumphosphat, Natrium-Stannate, Kalium-Stannate.

In einer besonders bevorzugten Ausführungsform umfasst die dritte Komponente Di-Natrium-bis-phenolat.

In einer weiteren bevorzugten Ausführungsform umfasst die dritte Komponente Di-Kalium-bis-phenolat.

Besonders bevorzugt ist es, dass die dritte Komponente Di-Natrium-bis-phenolat und Di-Kalium-bis-phenolat umfasst.

In einer weiteren bevorzugten Ausführungsform ist das erfindungsgemäße Verfahren so ausgestaltet, dass die vierte Komponente eine oder mehrere der folgenden schwefelhaltigen organischen Verbindungen umfasst: Butyl-p-toluensulfonat, Benzensulfonsäure, Benzensulfonat, p-Toluolsulfonsäure, p-Toluolsulfonat, Methylbenzensulfonsäure, Methylbenzensulfonat, Ethylbenzenesulfonat, Ethylbenzensulfonsäure, n-butylbenzensulfonat, n-butylbenzensulfonsäure, Phenylbenzensulfonat , Phenylbenzensulfonsäure, Methyl-p-toluolsulfonsäure, Methyl-p-toluolsulfonat, Ethyl-p-toluolsulfonat, Ethyl-p-toluolsulfonsäure, n-Butyl-p-toluolsulfonat, n-Butyl-toluolsulfonsäure, Octyl-p-toluolsulfonsäure, Octyl-p-toluolsulfonat, Phenyl-p-toluolsulfonat, Phenyl-p-toluolsulfonsäure, Trifluormethanesulfonat Trifluormethanesulfonsäure, Naphtalensulfonat, Naphtalensulfonsäure, Dimethylsulfonat, Dimethylsulfonsäure, Diethylsulfonat, Diethylsulfonsäure.

In einer besonders bevorzugten Ausführungsform umfasst die vierte Komponente Butyl-p-toluensulfonat.

Besonders gute Ergebnisse werden erzielt, wenn das erfindungsgemäße Verfahren so ausgestaltet ist, dass die erste Komponente Tetraethylammoniumhydroxid umfasst, die zweite Komponente Tetraphenylphosphoniumphenolat umfasst, die dritte Komponente Di-Natrium-bis-phenolat umfasst und die vierte Komponente Butyl-p-toluensulfonat umfasst.

In einer besonders bevorzugten Ausführungsform besteht die erste Komponente aus Tetraethylammoniumhydroxid, besteht die zweite Komponente aus Tetraphenylphosphoniumphenolat, besteht die dritte Komponente aus Di-Natrium-bis-phenolat und besteht die vierte Komponente aus Butyl-p-toluensulfonat.

In einer weiteren bevorzugten Ausführungsform ist das erfindungsgemäße Verfahren so ausgestaltet, dass die erste Komponente Tetraethylammoniumhydroxid umfasst, die zweite Komponente Tetraphenylphosphoniumphenolat umfasst, die dritte Komponente eine Natriumverbindung und eine Kaliumverbindung umfasst und die vierte Komponente Butyl-p-toluensulfonat umfasst.

In einer weiteren bevorzugten Ausführungsform ist das erfindungsgemäße Verfahren so ausgestaltet, dass die erste Komponente Tetraethylammoniumhydroxid umfasst, die zweite Komponente Tetraphenylphosphoniumphenolat umfasst, die dritte Komponente Di-Kalium-bis-phenolat umfasst und die vierte Komponente Butyl-p-toluensulfonat umfasst.

In einer weiteren bevorzugten Ausführungsform ist das erfindungsgemäße Verfahren so ausgestaltet, dass die erste Komponente Tetraethylammoniumhydroxid umfasst, die zweite Komponente Tetraphenylphosphoniumphenolat umfasst, die dritte Komponente Di-Natrium-bis-phenolat und Di-Kalium-bis-phenolat umfasst und die vierte Komponente Butyl-p-toluensulfonat umfasst. Tetraethylammoniumhydroxid (TEAH) weist die Formel [(C₂H₅)₄N(OH)] + H₂O auf und hat die CAS Nr. 77-98-5. Die Komponente wird vorzugsweise als Methanol basierte Lösung (25 Gew.-% TEAH in MeOH) eingesetzt. Die erste Komponente des Katalysatorsystems, vorzugsweise Tetraethylammoniumhydroxid, wird vorzugsweise in einer solchen Menge eingesetzt, dass die Zielkonzentration der Komponente, bezogen auf die Masse des Endpolymers, bei etwa 10 - 1000, insbesondere bei etwa 50 - 250, stärker bevorzugt bei etwa 100 - 180, noch stärker bevorzugt bei etwa 120 - 150 ppm (bezogen auf die Masse) liegt.

Bei der zweiten Komponente des Katalysatorsystems handelt es sich vorzugsweise um Tetraphenylphosphoniumphenolat (T-PPP). T-PPP weist die Summenformel C₃₀H₂₅OP auf und hat die CAS-Nr. 15464-47-8. Die Verbindung wird vorzugsweise in Diphenylcarbonat gelöst und in flüssiger Form der Reaktionsmischung zugesetzt. Die zweite Komponente des Katalysatorsystems, insbesondere in Form von Tetraphenylphosphoniumphenolat, wird vorzugsweise in einer solchen Menge eingesetzt, dass die Zielkonzentration der Komponente, bezogen auf die Masse des Endpolymers, bei etwa 0,2 - 50, insbesondere etwa 1 - 15, stärker bevorzugt etwa 2 - 12, noch stärker bevorzugt bei etwa 4 - 10 ppm (bezogen auf die Masse) liegt.

Die dritte Komponente des Katalysatorsystems ist vorzugsweise Di-Natrium-bis-phenolat. Di-Natrium-bis-phenolat weist die Summenformel C₁₅H₁₄O₂Na₂ auf und hat die CAS-Nr. 2444-90-8. Di-Natrium-bis-phenolat wird vorzugsweise in DPC gelöst und in flüssiger Form der Reaktion zugesetzt. Die dritte Komponente drei des Katalysatorsystems, vorzugsweise also Di-Natrium-bis-phenolat, wird vorzugsweise in einer solchen Menge eingesetzt, dass sie in einer Zielkonzentration der Komponente, bezogen auf die Masse des Endpolymers und des Alkalimetalls, von etwa 0,005 - 2, insbesondere etwa 0,05 - etwa 1, bevorzugt etwa 0,05 - 0,7, stärker bevorzugt etwa 0,09 - 0,3 ppm (bezogen auf die Masse) vorliegt.

Für die bevorzugte Ausführungsform, in der die dritte Komponente Di-Natrium-bis-phenolat und Di-Kalium-bis-phenolat umfasst, wird das Di-Natrium-bis-phenolat vorzugsweise in solchen Mengen eingesetzt, dass sie in einer Zielkonzentration der Komponente, bezogen auf die Masse des Endpolymers und des Alkalimetalls, von etwa 0,005 - 2, insbesondere etwa 0,01 - etwa 1, bevorzugt etwa 0,01 - 0,7, stärker bevorzugt etwa 0,01 - 0,1 ppm (bezogen auf die Masse) vorliegt und dass das Di-Kalium-bis-phenolat vorzugsweise in solchen Mengen eingesetzt wird, dass sie in einer Zielkonzentration der Komponente, bezogen auf die Masse des Endpolymers und des Alkalimetalls, von etwa 0,005 - 2, insbesondere etwa 0,01 - etwa 1, bevorzugt etwa 0,02 - 0,7, stärker bevorzugt etwa 0,03 - 0,5 ppm (bezogen auf die Masse) vorliegt.

Die vierte Komponente des Katalysatorsystems ist vorzugsweise Butyl-p-toluensulfonat. Butyl-p-toluensulfonat weist die Summenformel C₁₁H₁₆O₃S auf und hat die CAS-Nr. 778-28-9. Die Komponente vier des Katalysatorsystems, vorzugsweise also Butyl-p-toluensulfonat, wird vorzugsweise in einer solchen Menge eingesetzt, dass die Menge der vierten Komponente bei einem etwa 1,1 - 3-fachen, insbesondere etwa 1,5 - 2-fachen Molverhältnis bezogen auf die eingesetzte Menge der Komponente drei des Katalysatorsystems liegt. Somit liegt das molare Verhältnis der als vierte Komponente eingesetzten schwefelhaltigen organischen Verbindung in Bezug auf das in Form der dritten Komponente eingesetzte Alkalimetall, insbesondere in Form von Natrium, vorzugsweise bei etwa 1,1 - 3, stärker bevorzugt bei etwa 1,5 - 2.

Erfindungsgemäß wird das Verfahren so durchgeführt wird, dass zunächst die erste Komponente zugesetzt wird, zu einem späteren Zeitpunkt die zweite und dritte Komponente gleichzeitig zugesetzt werden und zu einem späteren Zeitpunkt die vierte Komponente zugesetzt wird. Bei der Herstellung von Polycarbonaten nach dem Schmelzverfahren werden typischerweise drei Reaktionsabschnitte unterschieden, nämlich die Umesterung, die Prä-Polykondensation und die Polykondensation.

Das erfindungsgemäße Verfahren ist derart ausgestaltet, dass das Verfahren wenigstens folgende Schritte umfasst:
a) Umesterung einer oder mehrerer Diarylcarbonate mit einer oder mehreren aromatischen Hydroxyverbindungen in mindestens einem Umesterungsreaktor,
b) Prä-Polykondensation des Reaktionsproduktes der Umesterung in mindestens einem Prä-Polykondensationsreaktor,
c) Polykondensation des Reaktionsproduktes der Prä-Polykondensation in mindestens einem Polykondensationsreaktor.

In der Umesterung soll hauptsächlich das Diarylcarbonat und die aromatische Hydroxyverbindung zu einem Molekül mit kleinstmöglicher Kette (Kettenlänge = 1) umgesetzt werden.

In der Prä-Polycondensation soll das Produkt der Oligomere bzw. Polymere umgesetzt werden, die eine Kettenlänge besitzen, die nicht der angestrebten Endkettenlänge entspricht.

In der Polycondensation wird das Produkt der Prä-Polycondensation in die angestrebte Endkettenlänge überführt bzw. in das finale Polycarbonat umgesetzt.

Aufgrund der drei unterschiedlichen Reaktionsabschnitte und der damit zusammenhängenden jeweiligen unterschiedlichen Anforderungen der Reaktion sind auch unterschiedlich darauf abgestimmte Katalysatoren vorteilhaft.

Das erfindungsgemäße Verfahren ist so ausgestaltet, dass die erste Komponente vor oder während der Umesterung (Schritt a)) zugesetzt wird, die zweite und dritte Komponente nach Schritt a) und vor oder während der Prä-Polykondensation (Schritt b)) zugesetzt werden und die vierte Komponente nach Schritt b) und vor oder während der Polykondensation (Schritt c)) zugesetzt wird.

In einer besonders bevorzugten Ausführungsform ist das erfindungsgemäße Verfahren so ausgestaltet, dass die erste und zweite Komponente bis zu einem Umsatzgrad der aromatischen Hydroxyverbindung von 99 % zugegeben wird und die dritte Komponente ab einem Umsatzgrad der aromatischen Hydroxyverbindung von größer gleich 99 % zugesetzt wird.

In einer bevorzugten Ausführungsform wird das erfindungsgemäße Verfahren so ausgeführt, dass das Reaktionsprodukt der Polykondensation mit Additiven versetzt wird.

In einer bevorzugten Ausführungsform wird das erfindungsgemäße Verfahren so ausgeführt, dass die erste Komponente vor oder während der Umesterung (Schritt a)) zugesetzt wird, die zweite und dritte Komponente nach Schritt a) und vor oder während der Prä-Polykondensation (Schritt b)) zugesetzt werden und die vierte Komponente nach Schritt b) und vor oder während der Zugabe von Additiven zugesetzt wird.

Als Edukte für das erfindungsgemäße Verfahren sind im Prinzip alle geeigneten aromatischen Hydroxyverbindungen und alle Diarylcarbonate denkbar.

In einer besonders bevorzugten Ausführungsform ist das erfindungsgemäße Verfahren so ausgestaltet, dass als aromatische Hydroxyverbindung Dihydroxydiarylalkane der Formel HO-Z-OH verwendet werden, wobei Z ein divalenter organischer Rest mit 6 bis 30 Kohlenstoffatomen ist, der eine oder mehrere aromatische Gruppen enthält.

In einer weiteren besonders bevorzugten Ausführungsform ist das erfindungsgemäße Verfahren so ausgestaltet, dass als Diarylcarbonat Di-(C₆ bis C₁₄-Aryl)-Kohlensäureester verwendet werden.

Besonders gute Ergebnisse werden erzielt, wenn als aromatische Hydroxyverbindung Bisphenol A und als Diarylcarbonat Diphenylcarbonat verwendet werden.

In einer weiteren besonders bevorzugten Ausführungsform ist das erfindungsgemäße Verfahren so ausgestaltet, dass das Reaktionsprodukt der Polykondensation mit Additiven versetzt wird um die finalen Eigenschaften des Produktes zu beeinflussen. Diese Additive können umfassen: UV-Stabilisatoren, Hydrolysestabilisatoren, Stabilisatoren gegen oxidativen Abbau, Thermostabilisatoren, Verarbeitungshilfsmittel, Fließhiflsmittel, Anti-Statik Mittel, Farbmittel, Pigmente, Flammschutzmittel, Schlagzähmodifikatoren, Weichmacher, Schmierstoffe, Endcapper, Füllstoffe, Verstärkungsstoffe, etc.

Stabilisatoren: Hierzu gehören zum Beispiel sterisch gehinderte Phenole, sekundär aromatische- und sterisch gehinderte Amine sowie Phospite, Phosphonite, Thioether und Metalsalze, 2-hydroxybenzophenone, Oxalanilide, 2-hydroxyphenylbenzotriazole, 2-hydroxyphenyltriazine, Salicylate, Formamidine, Zimtsäurester, Nickel-Komplexe, gehinderte Amine, 4-hydroxybenzoate, wie zum Beispiel: Butyl-hydroxytoluol, Arylamine, octadecyl 3-(3,5-ditert-butyl-4-hydroxyphenyl)propano-ate, [3-[3-(3,5-ditert-butyl-4-hydroxyphenyl)propanoyloxy]-2,2-bis[3-(3,5-ditert-butyl-4-hydroxyphenyl)propanoyloxymethyl]propyl] 3-(3,5-ditert-butyl-4-hydroxy-phenyl)propanoate, 2-[3,3-bis(3-tert-butyl-4-hydroxyphenyl)butanoyloxy]ethyl 3,3-bis(3-tert-butyl-4-hydroxyphenyl)butanoate, [2-[3-[1-[3-(3-tert-butyl-4-hy-droxy-5-methylphenyl)propanoyloxy]-2-methylpropan-2-yl]-2,4,8,10-tetraoxaspi-ro[5.5]undecan-9-yl]-2-methylpropyl] 3-(3-tert-butyl-4-hydroxy-5-methylphe-nyl)propanoate, 1,3,5-tris[(4-tert-butyl-3-hydroxy-2,6-dimethylphenyl)methyl]-1,3,5-triazinane-2,4,6-trione, 1,3,5-tris[(3,5-ditert-butyl-4-hydroxyphenyl)me-thyl]-1,3,5-triazinane-2,4,6-trione, (2R)-2,5,7,8-tetramethyl-2-[(4R,8R)-4,8,12-tri-methyltridecyl]-3,4-dihydrochromen-6-ol, 4-(2-phenylpropan-2-yl)-N-[4-(2-phe-nylpropan-2-yl)phenyl]aniline, 3,4-dibutyl-5-(2,4-dimethylphenyl)-3H-1-benzofu-ran-2-one, N,N-dioctadecylhydroxylamine, tris(2,4-ditert-butylphenyl) phosphite, [4-[4-bis(2,4-ditert-butylphenoxy)phosphanylphenyl]phenyl]-bis(2,4-ditert-butyl-phenoxy)phosphane, 3,9-bis(2,4-ditert-butylphenoxy)-2,4,8,10-tetraoxa-3,9-di-phosphaspiro[5.5]undecane, octadecyl 3-(3-octadecoxy-3-oxopropyl)sulfanylpro-panoate, 1-(octadecyldisulfanyl)octadecane, (2-hydroxy-4-octoxyphenyl)-phenyl-methanone, 2-(benzotriazol-2-yl)-4,6-bis(2-methylbutan-2-yl)phenol, 2-tert-butyl-6-(5-chlorobenzotriazol-2-yl)-4-methylphenol, 2,4-ditert-butyl-6-(5-chlorobenzotriazol-2-yl)phenol, 2-(benzotriazol-2-yl)-4-methylphenol, 2-(benzotriazol-2-yl)-4-methyl-6-[2-methyl-3-[methyl-bis(trimethylsilyloxy)silyl]propyl]phenol, 2-(benzotriazol-2-yl)-4,6-bis(2-phenylpropan-2-yl)phenol, 6-[2,6-bis(2,4-dimethylphenyl)-1H-1,3,5-triazin-4-ylidene]-3-octoxycyclohexa-2,4-dien-1-one, (6Z)-6-(4,6-diphenyl-1H-1,3,5-triazin-2-ylidene)-3-hexoxycyclohexa-2,4-dien-1-one, butan-1-amine; nickel(2+);2-[2-oxido-5-(2,4,4-trimethylpentan-2-yl)phenyl]sulfanyl-4-(2,4,4-trimethylpentan-2-yl)phenolate, bis(2,2,6,6-tetramethylpiperidin-4-yl) decanedioate, (2,2,6,6-tetramethylpiperidin-4-yl) octadecanoate, N-[6-[formyl-(2,2,6,6-tetramethylpiperidin-4-yl)amino]hexyl]-N-(2,2,6,6-tetramethylpiperidin-4-yl)formamide, 2-(4-methoxy-2,2,6,6-tetramethylpiperidin-1-yl)ethyl 4-oxopentanoate, 2-N-(2,2,6,6-tetramethylpiperidin-4-yl)-2-N-[6-[(2,2,6,6-tetramethylpiperidin-4-yl)amino]hexyl]-4-N-(2,4,4-trimethylpentan-2-yl)-1,3,5-triazine-2,4-diamine, N,N'bis(2,2,6,6-tetramethylpiperidin-4-yl)hexane-1,6-diamine;4-(4,6-dichloro-1,3,5-triazin-2-yl)morpholine, 6-N-[3-[[4,6-bis[butyl-(1,2,2,6,6-pentamethylpiperidin-4-yl)amino]-1,3,5-triazin-2-yl]-[2-[[4,6-bis[butyl-(1,2,2,6,6-pentamethylpiperidin-4-yl)amino]-1,3,5-triazin-2-yl]-[3-[[4,6-bis[butyl-(1,2,2,6,6-pentamethylpiperidin-4-yl)amino]-1,3,5-triazin-2-yl]amino]propyl]amino]ethyl]amino]propyl]-2-N,4-N-dibutyl-2-N,4-N-bis(1,2,2,6,6-pentamethylpiperidin-4-yl)-1,3,5-triazine-2,4,6-triamine, 2-Oxohexamethylenimine, 1,4-bis(2-methylanilino)anthracene-9,10-dione, [4-[4-bis(2,4-ditert-butylphenoxy)phosphanylphenyl]phenyl]-bis(2,4-ditert-butylphe-noxy)phosphane, Phthalozyanin, Diurethane dimethacrylate, 1,4-Bis(mesitylami-no)anthraquinone, Tetraethyl 2,2'-(1,4-phenylenedimethylylidene)dimalonate, 2-(4,6-diphenyl-1,3,5-triazin-2-yl)-5-(hexyloxy)phenol, 2,2-Bis(((2-cyano-3,3-diphe-nylacryloyl)oxy)methyl)propane-1,3-diyl bis(2-cyano-3,3-diphenylacrylate), 5-tert-butyl-2-[5-(5-tert-butyl-1,3-benzoxazol-2-yl)thiophen-2-yl]-1,3-benzoxazole, 1,2-Bis(4-(benzo[d]oxazol-2-yl)phenyl)ethene, Titandioxid, Eisenoxid, Zinkoxid, Bis(2,2,6,6-tetramethyl-4-piperidyl)sebacat, Phenyltriazine, Oxalanilide, Benzotriazole, Benzophenone, 2,2,6,6-Tetramethylpiperidin, 2-(2H-benzotriazol-2-yl)-4,6-bis(1-methyl-1-phenylethyl)phenol, organo-phosphite, octadecyl 3-(3,5-ditert-butyl-4-hydroxyphenyl)propanoate.

Flammschutz: Hierzu gehören inorganische und organische Verbindungen wie zum Beispiel Aluminiumtrihydroxid, Magnesiumhydroxid, Antimontrioxid, Antimonpentoxid, Natriumantimonat, Zinkborat, Ammoniumpolyphosphat, Eisenoxid, bromiertes Polystyrol, TBBPA, Phosphorus trihydride, Dimethylmethylphosphonat, Pentabromdiphenyloxid, Diphenyldecylphosphat, Tetrabrombishenol A, Salze aromatischer Solfonsäuren, Phosphorsäureester, 9,10-Dihydro-9-oxa-10-phosphaphen-anthrene 10-oxide, Triphenylphosphat, Resocinol-phosphat, Bisphenol A- bis-(diphenyl) phosphat.

Farbmittel: Hierzu gehören inorganische und organische Stoffe wie zum Beispiel Titandioxid, Eisenoxid, Chromoxid, Ultramarinblau, Nickel(II)phthalocyanine, bis[4-(dimethylamino)phenyl]-[4-(N-methylanilino)naphthalen-1-yl]methanol, Kupferphthalocyanin, Kupfer(II)phthalocyanin, 1,4-Bis(mesitylamino)anthraquinone.

Fließverbesserer: Hierzu gehören Stearin-, 12-hydroxystearin-, Palmitin-, Behensäure, Cetylalkohol, Stearylalkohol, Metalstearate, Butylstearat, Tridecylstearat, Glycerolmonostearat, Glycerolmonoricinolat, Glycerolmonooleat, Glyceroltristearat, Glyceroltri-12-hydroxystearat, Trimethylolpropantristearat, Pentaerythritoltetrastearat, Fettsäuren und Fettsäurester, Isostearamid, Oleamid, Erucamid, Ethylenbisstearylamid, Distearyladipat, Distearylphthalat, Cetylpalmitat, Cetylstearat, Stearylstearat, Bephenylbehenat wie zum Beispiel Octadecan-1-ol, 1,1,1-Tris(4-hydroxyphenyl)ethane, 2-octyldodecyl octadecanoate, stearin säure, 2-octyldodecyl octadecanoate, Pentaerythritol tetrastearate.

Dem Fachmann sollte allerdings bewusst sein, dass alle Additive aus den allgemein bekannten und Branchen üblichen am Markt verfügbaren Stoffen ausgewählt werden können, so wie diese zum Beispiel in Wolf, R. and Kaul, B. L. 2000. Plastics, Additives. Ullmann's Encyclopedia of Industrial Chemistry, Wiley-VCH Verlag GmbH & Co. [DOI: 10.1002/14356007.a20_459] beschrieben sind.

In einer bevorzugten Ausführungsform wird das erfindungsgemäße Verfahren so ausgeführt, dass ein oder mehrere Additiv(e) in einem Polycarbonat Hauptstrom zugegeben werden.

In einer weiteren bevorzugten Ausführungsform wird das erfindungsgemäße Verfahren so ausgeführt, dass ein oder mehrere Additiv(e) in einem Polycarbonat Nebenstrom zugegeben werden.

In einer bevorzugten Ausführungsform erfolgt die Zugabe der Additive mit einem Extruder.

Die vorliegende Erfindung betrifft auch eine Katalysatorkombination, insbesondere zur Verwendung in einem Verfahren zur Herstellung von Polycarbonat, die umfasst: eine erste Komponente (Komponente 1), umfassend eine oder mehrere quartäre Stickstoffverbindungen, eine zweite Komponente (Komponente 2), umfassend eine oder mehrere quartäre Phosphorverbindungen, eine dritte Komponente (Komponente 3), umfassend eine oder mehrere Alkalimetallverbindungen und eine vierte Komponente (Komponente 4), umfassend eine oder mehrere schwefelhaltige organische Verbindungen, wobei die dritte Komponente Di-Natrium-bis-phenolat und Di-Kalium-bis-phenolat, umfasst.

In einer bevorzugten Ausführungsform ist die erfindungsgemäße Katalysatorkombination so ausgestaltet, dass die erste Komponente eine oder mehrere quartäre Stickstoffverbindungen mit dem allgemeinen Aufbau [(R)₄-N]⁺ [X]⁻ umfasst, wobei R für voneinander unabhängige gleiche oder verschiedene Alky- und oder Aryl-gruppen steht und X- anorganische oder organische Anionen umfasst, insbesondere Hydroxid, Sulfat, Carbonat, Formiat, Benzoat, Phenolat, wobei die erste Komponente insbesondere eine oder mehrere der folgenden Verbindungen umfasst: Tetramethylammoniumhydroxid, Tetraethylammoniumhydroxid, Tetrabutylammoniumhydroxid, Tetramethylammoniumformiat, Tetraethylammoniumformiat, Tetrabutylammoniumformiat, Tetramethylammoniumacetat, Tetraethylammoniumacetat, Tetrabutylammoniumacetat, Tetramethylammoniumfluorid, Tetraethylammoniumfluorid, Tetrabutylammoniumfluorid.

In einer besonders bevorzugten Ausführungsform umfasst die erste Komponente Tetraethylammoniumhydroxid.

In einer bevorzugten Ausführungsform ist die erfindungsgemäße Katalysatorkombination so ausgestaltet, dass die zweite Komponente eine oder mehrere quartäre Phosphorverbindungen mit dem allgemeinen Aufbau [(R)₄-P]⁺ [X]⁻ umfasst, wobei R für voneinander unabhängige gleiche oder verschiedene Alky- und oder Aryl-gruppen steht und X- anorganische oder organische Anionen umfasst, insbesondere Hydroxid, Sulfat, Carbonat, Formiat, Benzoat, Phenolat, wobei die zweite Komponente insbesondere eine oder mehrere der folgenden Verbindungen umfasst: Tetramethylphosphoniumhydroxid, Tetramethylphosphoniumformiat, Tetramethylphosphoniumacetat, Tetramethylphosphoniumbenzoat, Tetraethylphosphoniumhydroxid, Tetraethylphosphoniumformiat, Tetraethylphosphoniumacetat, Tetrethylphosphoniumbenzoat, Tetrabutylphosphoniumhydroxid, Tetrabutylphosphoniumacetat, Tetrabutylphosphponiumbenzoat, Tetraphenylphosphoniumhydroxid, Tetraphenylphosphoniumacetat, Tetraphenylphosphoniumphenolat, Tetrabutylphosphoniumacetat, Tetramethylphosphonium-tetraphenylborhydrid, Tetraphenylphosphoniumbromid, Tetraphenylphosphonium-tetraphenylboranat, Tetra-(p-tert.-butylphenyl)-phosphonium diphenyl phosphat, Triphenylbutylphosphoniumphenolat, Triphenylbutylphosphoniumtetraphenylboranat, Tetraphenylphosphoniumchlorid, Tetraphenylphosphoniumfluorid.

In einer besonders bevorzugten Ausführungsform umfasst die zweite Komponente Tetraphenylphosphoniumphenolat.

Die dritte Komponente umfasst Di-Natrium-bis-phenolat und Di-Kalium-bis-phenolat.

In einer bevorzugten Ausführungsform ist die erfindungsgemäße Katalysatorkombination so ausgestaltet, dass die vierte Komponente eine oder mehrere der folgenden schwefelhaltigen organischen Verbindungen umfasst: Butyl-p-toluensulfonat, Benzensulfonsäure, Benzensulfonat, p-Toluolsulfonsäure, p-Toluolsulfonat, Methylbenzensulfonsäure, Methylbenzensulfonat, Ethylbenzenesulfonat, Ethylbenzensulfonsäure, n-butylbenzensulfonat, n-butylbenzensulfonsäure, Phenylbenzensulfonat , Phenylbenzensulfonsäure, Methyl-p-toluolsulfonsäure, Methyl-p-toluolsulfonat, Ethyl-p-toluolsulfonat, Ethyl-p-toluolsulfonsäure, n-butyl-p-toluolsulfonat, n-butyl-toluolsulfonsäure, Octyl-p-toluolsulfonsäure, Octyl-p-toluolsulfonat, Phenyl-p-toluolsulfonat, Phenyl-p-toluolsulfonsäure, Trifluormethanesulfonat Trifluormethanesulfonsäure, Naphtalensulfonat, Naphtalensulfonsäure, Dimethylsulfonat, Dimethylsulfonsäure, Diethylsulfonat, Diethylsulfonsäure.

In einer besonders bevorzugten Ausführungsform besteht die vierte Komponente aus Butyl-p-toluensulfonat.

Das erfindungsgemäße Verfahren betrifft darüber hinaus auch die Verwendung der beschriebenen Katalysatorkombination in einem Verfahren zur Herstellung von Polycarbonat.

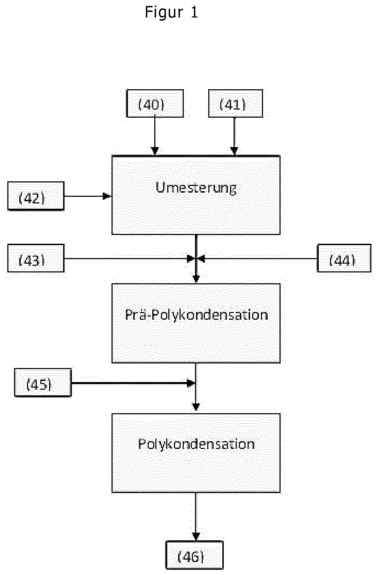

Figur 1 zeigt eine schematische Darstellung des erfindungsgemäßen Verfahrens, bei dem die Zugabe der einzelnen Komponenten der Katalysatorkombination in einzelnen Reaktionsstufen erfolgt:

| **Figur 1** | |
|---|---|
| **Nr.** | **Beschreibung** |
| 40 | Diarylcarbonate Komponente |
| 41 | Aromatische Hydroxyl Komponente |
| 42 | Erste Komponente |
| 43 | Zweite Komponente |
| 44 | Dritte Komponente |
| 45 | Vierte Komponente |
| 46 | Polycarbonatschmelze |

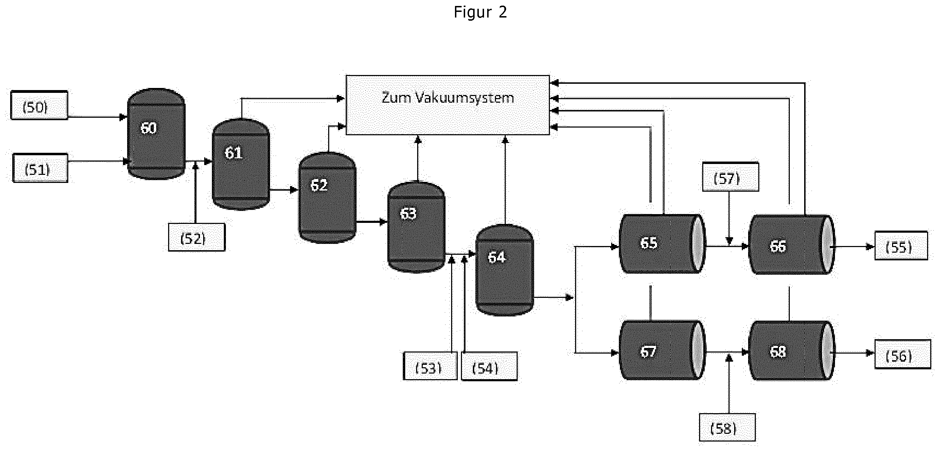

Eine besonders bevorzugte Ausführungsform des erfindungsgemäßen Verfahrens ist in Figur 2 dargestellt.

| **Figur 2** | |
|---|---|
| **Nr.** | **Beschreibung** |
| 50 | Diarylcarbonate Komponente |
| 51 | Aromatische Hydroxyl Komponente |
| 52 | Erste Komponente |
| 53 | Zweite Komponente |
| 54 | Dritte Komponente |
| 55 | Polycarbonatschmelze Line 1 |
| 56 | Polycarbonatschmelze Line 2 |
| 57 | Vierte Komponente Line 1 |
| 58 | Vierte Komponente Line 2 |
| 60 | Rohstoffmischbehälter |
| 61 | Umesterungsreaktor 1 |
| 62 | Umesterungsreaktor 2 |
| 63 | Umesterungsreaktor 3 |
| 64 | Prä-Polycondensationsreaktor 1 |
| 65 | Prä-Polycondensationsreaktor 2 Line 1 |
| 66 | Finish-polycondensationsreaktor Line 1 |
| 67 | Prä-Polycondensationsreaktor 2 Line 2 |
| 68 | Finish-polycondensationsreaktor Line 2 |

Die Rohstoffströme (50) und (51) werden in einem bestimmten molaren Verhältnis von DPC zu BPA zwischen 0,8 bis 1,3 zusammengeführt und vermischt und in einem Rohstoff-Mischbehälter (60) bei einer Temperatur von nicht mehr als 170°C gelagert. Das Rohstoffgemisch wird aus dem Rohstoffmischbehälter mit einer Pumpe in den ersten Umesterungsreaktor (61) gefördert.

In Anwesenheit der ersten Komponente (52) und bei einer Temperatur von 180 bis 260 °C und einem Druck von 300 kPa (a) bis 5 kPa (a) werden die Rohstoffe umgesetzt.

Anschließend wird das Zwischenprodukt aus dem Umesterungsreaktor 1 (61) in den Umesterungsreaktor 2 (62) gefördert und bei einer Temperatur von 180 bis 260 °C, die oberhalb der Temperatur des vorangegangenen Reaktors liegt, und einem Druck von 300 kPa (a) bis 5 kPa (a), der allerdings niedriger ist als der Druck im vorangegangenen Reaktor, weiter umgesetzt.

Anschließend wird das Zwischenprodukt aus dem Umesterungsreaktor 2 (62) in den Umesterungsreaktor 3 (63) gefördert und bei einer Temperatur von 180 bis 260 °C, die oberhalb der Temperatur des vorangegangenen Reaktors liegt, und einem Druck von 300 kPa (a) bis 5 kPa (a), der allerdings niedriger ist als der Druck im vorangegangenen Reaktor, weiter umgesetzt.

Das Umesterungsprodukt aus dem Umesterungsreaktor 3 (63) wird in den nächsten Reaktionsabschnitt bzw. den Prä-Polycondensationsreaktor 1 (64) gefördert. Darüber hinaus wird die zweite Komponente (53) und die dritte Komponente (54) hinzugegeben. Die Reaktion wird bei einer Temperatur von 210 bis 260 °C und bei einem Druck von 10 kPa (a) bis 1 kPa (a) durchgeführt.

Das Zwischenprodukt des Prä-Polycondensationsreaktor 1 (64) wird in Abhängigkeit der Anzahl der folgenden Produktionslinien aufgeteilt und im Prä-Polycondensationsreaktor 2 (65) oder (67) weiterreagiert. Die Reaktion wird bei einer Temperatur von 250 bis 300 °C und bei einem Druck von 1 kPa (a) bis 0,1 kPa (a) durchgeführt.

Anschließend wird das Zwischenprodukt aus dem Prä-Polycondensationsreaktor 2 (65) oder (67) in den Polycondensationsreaktor (66) oder (68) gefördert und die vierte Komponente (57) bzw. (58) wird hinzugegeben. Das Zwischenprodukt wird bei einer Temperatur von 280 bis 310 °C und einem Druck von 1 kPa (a) bis 0,01 kPa (a) bis zur gewünschten Endkettenlänge umgesetzt.

Der aus dem Polycondensationsreaktor geförderte Polycarbonatstrom (55) oder (56) wird in einem weiteren Schritt mit Additiven versehen und/oder granuliert.

## Patentansprüche

1. Verfahren zur Herstellung eines Polycarbonats durch Reaktion eines oder mehrerer Diarylcarbonate mit einem oder mehreren aromatischen Hydroxyverbindungen, wobei in dem Verfahren eine Katalysatorkombination eingesetzt wird, die umfasst:
- eine erste Komponente, umfassend eine oder mehrere quartäre Stickstoffverbindungen,
- eine zweite Komponente, umfassend eine oder mehrere quartäre Phosphorverbindungen,
- eine dritte Komponente, umfassend eine oder mehrere Alkalimetallverbindungen und
- eine vierte Komponente, umfassend eine oder mehrere schwefelhaltige organischen Verbindung,
wobei das Verfahren wenigstens folgende Schritte umfasst:
a) Umesterung einer oder mehrerer Diarylcarbonate mit einer oder mehreren aromatischen Hydroxyverbindungen in mindestens einem Umesterungsreaktor,
b) Prä-Polykondensation des Reaktionsproduktes der Umesterung in mindestens einem Prä-Polykondensationsreaktor,
c) Polykondensation des Reaktionsproduktes der Prä-Polykondensation in mindestens einem Polykondensationsreaktor,
**dadurch gekennzeichnet, dass** die erste Komponente vor oder während der Umesterung (Schritt a)) zugesetzt wird, die Komponenten 2 und 3 nach Schritt a) und vor oder während der Prä-Polykondensation (Schritt b)) zugesetzt werden und die vierte Komponente nach Schritt b) und vor oder während der Polykondensation (Schritt c)) zugesetzt wird.

2. Verfahren nach Anspruch 1, **dadurch gekennzeichnet, dass** die erste Komponente eine oder mehrere quartäre Stickstoffverbindungen mit dem allgemeinen Aufbau [(R)₄-N]⁺ [X]⁻ umfasst, wobei R für voneinander unabhängige gleiche oder verschiedene Alky- und oder Aryl-gruppen steht und X- anorganische oder organische Anionen umfasst, insbesondere Hydroxid, Sulfat, Carbonat, Formiat, Benzoat, Phenolat, wobei die erste Komponente insbesondere eine oder mehrere der folgenden Verbindungen umfasst: Tetramethylammoniumhydroxid, Tetraethylammoniumhydroxid, Tetrabutylammoniumhydroxid, Tetramethylammoniumformiat, Tetraethylammoniumformiat, Tetrabutylammoniumformiat, Tetramethylammoniumacetat, Tetraethylammoniumacetat, Tetrabutylammoniumacetat, Tetramethylammoniumfluorid, Tetraethylammoniumfluorid, Tetrabutylammoniumfluorid,
und/oder
dass die zweite Komponente eine oder mehrere quartäre Phosphorverbindungen mit dem allgemeinen Aufbau [(R)₄-P]⁺ [X]⁻ umfasst, wobei R für voneinander unabhängige gleiche oder verschiedene Alky- und oder Aryl-gruppen steht und X- anorganische oder organische Anionen umfasst,insbesondere Hydroxid, Sulfat, Carbonat, Formiat, Benzoat, Phenolat, wobei die zweite Komponente insbesondere eine oder mehrere der folgenden Verbindungen umfasst: Tetramethylphosphoniumhydroxid, Tetramethylphosphoniumformiat, Tetramethylphosphoniumacetat, Tetramethylphosphoniumbenzoat, Tetraethylphosphoniumhydroxid, Tetraethylphosphoniumformiat, Tetraethylphosphoniumacetat, Tetrethylphosphoniumbenzoat, Tetrabutylphosphoniumhydroxid, Tetrabutylphosphoniumacetat, Tetrabutylphosphponiumbenzoat, Tetraphenylphosphoniumhydroxid, Tetraphenylphosphoniumacetat, Tetraphenylphosphoniumphenolat, Tetrabutylphosphoniumacetat, Tetramethylphosphonium-tetraphenylborhydrid, Tetraphenylphosphoniumbromid, Tetraphenylphosphonium-tetraphenylboranat, Tetra-(p-tert.-butylphenyl)-phosphonium diphenyl phosphat, Triphenylbutylphosphoniumphenolat, Triphenylbutylphosphoniumtetraphenylboranat, Tetraphenylphosphoniumchlorid, Tetraphenylphosphoniumfluorid,
und/oder
dass die dritte Komponente eine oder mehrere der folgenden Alkalimetallverbindungen umfasst: Alkalimetallhydroxid, -carboxylsäuren und deren Salze sowie in Form von nicht flüchtigen organischen und inorganischen Säuren und deren Salzen, Alkalimetallphosphate, -phosphit, -sulfat, wobei die dritte Komponente insbesondere eine oder mehrere der folgenden Verbindungen umfasst: Natriumhydroxid, Kaliumhydroxid, Lithiumhydroxid, Natriumacetat, Kaliumacetat, Lithiumacetat, Natriumcarbonat, Kaliumcarbonat, Lithiumcarbonat, Natriumbicarbonat, Kaliumbicarbonat, Lithiumbicarbonat, Natriummethanolat, Kaliummethanolat, Lithiummethanolat, Natriumethanolat, Kaliumethanolat, Lithiumethanolat, Natriumstearat, Kaliumstearat, Lithiumstearat, Natriumphenolat, Kaliumphenolat, Lithiumphenolat, Natrium-bis-phenolat, Kalium-bis-phenolat, Lithium-bis-phenolat, Di-Natrium-bis-phenolat, Di-Kalium-bis-phenolat, Di-Lithium-bis-phenolat, Natriumbenzoat, Kaliumbenzoat, Lithiumbenzoat, Natriumborhydrid, Kaliumborhydrid, Lithiumborhydrid, Natriumamid, Kaliumamid, Lithiumamid, Natriumphosphat, Di-Natriumhydrogenphosphat, Natriumdihydrogenphosphat, Kaliumphosphat, Di-Kaliumhydrogenphosphat, Kaliumdihydrogenphosphat, Lithiumphosphat, Di-Lithiumhydrogenphosphat, Lithiumdihydrogenphosphat, Natriumsulfat, Natriumhydrogensulfat, Natrium-Kaliumphosphat, Natrium-Stannate, Kalium-Stannate.

3. Verfahren gemäß mindestens einem der vorhergehenden Ansprüche, **dadurch gekennzeichnet, dass** die dritte Komponente ein Kaliumsalz umfasst.

4. Verfahren gemäß mindestens einem der vorhergehenden Ansprüche, **dadurch gekennzeichnet, dass** die dritte Komponente ein Natriumsalz und ein Kaliumsalz, insbesondere Di-Natrium-bis-phenolat und Di-Kalium-bis-phenolat, umfasst.

5. Verfahren gemäß mindestens einem der vorhergehenden Ansprüche, **dadurch gekennzeichnet, dass** die vierte Komponente eine oder mehrere der folgenden schwefelhaltigen organischen Verbindungen umfasst: Butyl-p-toluensulfonat , Benzensulfonsäure, Benzensulfonat, p-Toluolsulfonsäure, p-Toluolsulfonat, Methylbenzensulfonsäure, Methylbenzensulfonat, Ethylbenzenesulfonat, Ethylbenzensulfonsäure, n-butylbenzensulfonat, n-butylbenzensulfonsäure, Phenylbenzensulfonat , Phenylbenzensulfonsäure, Methyl-p-toluolsulfonsäure, Methyl-p-toluolsulfonat, Ethyl-p-toluolsulfonat, Ethyl-p-toluolsulfonsäure, n-Butyl-p-toluolsulfonat, n-Butyl-toluolsulfonsäure, Octyl-p-toluolsulfonsäure, Octyl-p-toluolsulfonat, Phenyl-p-toluolsulfonat, Phenyl-p-toluolsulfonsäure, Trifluormethanesulfonat Trifluormethanesulfonsäure, Naphtalensulfonat, Naphtalensulfonsäure, Dimethylsulfonat, Dimethylsulfonsäure, Diethylsulfonat, Diethylsulfonsäure.

6. Verfahren gemäß mindestens einem der vorhergehenden Ansprüche, **dadurch gekennzeichnet, dass** die erste Komponente Tetraethylammoniumhydroxid umfasst, die zweite Komponente Tetraphenylphosphoniumphenolat umfasst, die dritte Komponente Di-Natrium-bis-phenolat umfasst und die vierte Komponente Butyl-p-toluensulfonat umfasst,
und/oder
dass die erste Komponente Tetraethylammoniumhydroxid umfasst, die zweite Komponente Tetraphenylphosphoniumphenolat umfasst, die dritte Komponente eine Natriumverbindung und eine Kaliumverbindung umfasst und die vierte Komponente Butyl-p-toluensulfonat umfasst,
und/oder
dass die erste Komponente Tetraethylammoniumhydroxid umfasst, die zweite Komponente Tetraphenylphosphoniumphenolat umfasst, die dritte Komponente Di-Kalium-bis-phenolat umfasst und die vierte Komponente Butyl-p-toluensulfonat umfasst.

7. Verfahren gemäß mindestens einem der vorhergehenden Ansprüche, **dadurch gekennzeichnet, dass** die erste Komponente Tetraethylammoniumhydroxid umfasst, die zweite Komponente Tetraphenylphosphoniumphenolat umfasst, die dritte Komponente Di-Natrium-bis-phenolat und Di-Kalium-bis-phenolat umfasst und die vierte Komponente Butyl-p-toluensulfonat umfasst, wobei
das Di-Natrium-bis-phenolat vorzugsweise in solchen Mengen eingesetzt wird, dass es in einer Zielkonzentration der Komponente, bezogen auf die Masse des Endpolymers und des Alkalimetalls, von etwa 0,005 - 2, insbesondere etwa 0,01 - etwa 1, bevorzugt etwa 0,01 - 0,7, stärker bevorzugt etwa 0,01 - 0,1 ppm (bezogen auf die Masse) vorliegt und dass das Di-Kalium-bis-phenolat vorzugsweise in solchen Mengen eingesetzt wird, dass es in einer Zielkonzentration der Komponente, bezogen auf die Masse des Endpolymers und des Alkalimetalls, von etwa 0,005 - 2, insbesondere etwa 0,01 - etwa 1, bevorzugt etwa 0,02 - 0,7, stärker bevorzugt etwa 0,03 - 0,5 ppm (bezogen auf die Masse) vorliegt.

8. Verfahren gemäß mindestens einem der vorhergehenden Ansprüche, **dadurch gekennzeichnet, dass**
- die erste Komponente, vorzugsweise Tetraethylammoniumhydroxid, in einer solchen Menge eingesetzt wird, dass die Zielkonzentration der Komponente, bezogen auf die Masse des Endpolymers, bei etwa 10 - 1000, insbesondere bei etwa 50 - 250, stärker bevorzugt bei etwa 100 - 180, noch stärker bevorzugt bei etwa 120 - 150 ppm (bezogen auf die Masse) liegt;
- die zweite Komponente, vorzugsweise Tetraphenylphosphoniumphenolat, in einer solchen Menge eingesetzt wird, dass die Zielkonzentration der Komponente, bezogen auf die Masse des Endpolymers, bei etwa 0,2 - 50, insbesondere etwa 1 - 15, stärker bevorzugt etwa 2 - 12, noch stärker bevorzugt bei etwa 4 - 10 ppm (bezogen auf die Masse) liegt;
- die dritte Komponente, vorzugsweise Di-Natrium-bis-phenolat, in einer solchen Menge eingesetzt wird, dass die Zielkonzentration der Komponente, bezogen auf die Masse des Endpolymers und des Alkalimetalls, bei etwa 0,005 - 2, insbesondere etwa 0,05 - etwa 1, bevorzugt etwa 0,05 - 0,7, stärker bevorzugt etwa 0,09 - 0,3 ppm (bezogen auf die Masse) liegt;
- die vierte Komponente, vorzugsweise Butyl-p-toluensulfonat, in einer solchen Menge eingesetzt wird, dass die Menge der Komponente bei einem etwa 1,1 - 3-fachen, insbesondere etwa 1,5 - 2-fachen Molverhältnis bezogen auf die eingesetzte Menge der dritten Komponente des Katalysatorsystems liegt,
und/oder
- die erste Komponente, vorzugsweise Tetraethylammoniumhydroxid, in einer solchen Menge eingesetzt wird, dass die Zielkonzentration der Komponente, bezogen auf die Masse des Endpolymers, bei etwa 10 - 1000, insbesondere bei etwa 50 - 250, stärker bevorzugt bei etwa 100 - 180, noch stärker bevorzugt bei etwa 120 - 150 ppm (bezogen auf die Masse) liegt;
- die zweite Komponente, vorzugsweise Tetraphenylphosphoniumphenolat, in einer solchen Menge eingesetzt wird, dass die Zielkonzentration der Komponente, bezogen auf die Masse des Endpolymers, bei etwa 0,2 - 50, insbesondere etwa 1 - 15, stärker bevorzugt etwa 2 - 12, noch stärker bevorzugt bei etwa 4 - 10 ppm (bezogen auf die Masse) liegt;
- die dritte Komponente, vorzugsweise Di-Kalium-bis-phenolat, in einer solchen Menge eingesetzt wird, dass die Zielkonzentration der Komponente, bezogen auf die Masse des Endpolymers und des Alkalimetalls, bei etwa 0,005 - 2, insbesondere etwa 0,05 - etwa 1, bevorzugt etwa 0,05 - 0,7, stärker bevorzugt etwa 0,09 - 0,3 ppm (bezogen auf die Masse) liegt;
- die vierte Komponente, vorzugsweise Butyl-p-toluensulfonat, in einer solchen Menge eingesetzt wird, dass die Menge der Komponente bei einem etwa 1,1 - 3-fachen, insbesondere etwa 1,5 - 2-fachen Molverhältnis bezogen auf die eingesetzte Menge der dritten Komponente des Katalysatorsystems liegt.

9. Verfahren gemäß mindestens einem der vorhergehenden Ansprüche, **dadurch gekennzeichnet, dass** das Reaktionsprodukt der Polykondensation mit Additiven versetzt wird.

10. Verfahren gemäß mindestens einem der vorhergehenden Ansprüche, **dadurch gekennzeichnet, dass** die erste Komponente vor oder während der Umesterung (Schritt a)) zugesetzt wird, die zweite und dritte Komponente nach Schritt a) und vor oder während der Prä-Polykondensation (Schritt b)) zugesetzt werden und die vierte Komponente nach Schritt b) und vor oder während der Zugabe von Additiven zugesetzt wird.

11. Verfahren gemäß mindestens einem der vorhergehenden Ansprüche, **dadurch gekennzeichnet, dass** als aromatische Hydroxyverbindung Dihydroxydiarylalkane der Formel HO-Z-OH verwendet werden, wobei Z ein divalenter organischer Rest mit 6 bis 30 Kohlenstoffatomen ist, der eine oder mehrere aromatische Gruppen enthält,
und/oder
dass als Diarylcarbonat Di-(C₆ bis C₁₄-Aryl)-Kohlensäureester verwendet werden,
und/oder
dass als aromatische Hydroxyverbindung Bisphenol A und als Diarylcarbonat Diphenylcarbonat verwendet werden.

12. Verfahren gemäß mindestens einem der vorhergehenden Ansprüche, **dadurch gekennzeichnet, dass** ein oder mehrere Additiv(e) in einem Polycarbonat Hauptstrom zugegeben werden,
oder
dass ein oder mehrere Additiv(e) in einem Polycarbonat Nebenstrom zugegeben werden, wobei
die Zugabe von Additiven bevorzugt mit einem Extruder erfolgt.

13. Katalysatorkombination, insbesondere zur Verwendung in einem Verfahren zur Herstellung von Polycarbonat, die umfasst:
- eine erste Komponente, umfassend eine oder mehrere quartäre Stickstoffverbindungen,
- eine zweite Komponente, umfassend eine oder mehrere quartäre Phosphorverbindungen,
- eine dritte Komponente, umfassend eine oder mehrere Alkalimetallverbindungen und
- eine vierte Komponente, umfassend eine oder mehrere schwefelhaltige organischen Verbindung,
wobei die dritte Komponente Di-Natrium-bis-phenolat und Di-Kalium-bis-phenolat, umfasst.

14. Katalysatorkombination gemäß Anspruch 13, wobei die erste Komponente wie in Anspruch 2 definiert ist und/oder die zweite Komponente wie in Anspruch 2 definiert ist und/oder die vierte Komponente wie in Anspruch 5 definiert ist,
wobei es bevorzugt ist, dass die erste Komponente Tetraethylammoniumhydroxid umfasst, die zweite Komponente Tetraphenylphosphoniumphenolat umfasst und die vierte Komponente Butyl-p-toluensulfonat umfasst.

15. Verwendung einer Katalysatorkombination gemäß mindestens einem der Ansprüche 13 bis 14 in einem Verfahren zur Herstellung von Polycarbonat.

## Claims

1. A process for preparing a polycarbonate by reacting one or more diaryl carbonates with one or more aromatic hydroxy compounds, wherein in the process a catalyst combination is employed which comprises:
- a first component comprising one or more quaternary nitrogen compounds,
- a second component comprising one or more quaternary phosphorus compounds,
- a third component comprising one or more alkali metal compounds and
- a fourth component comprising one or more sulphur-containing organic compounds,
the method comprising at least the following steps:
a) transesterification of one or more diaryl carbonates with one or more aromatic hydroxy compounds in at least one transesterification reactor,
b) pre-polycondensation of the reaction product of the transesterification in at least one pre-polycondensation reactor,
c) polycondensation of the reaction product of the pre-polycondensation in at least one polycondensation reactor,
**characterized in that** the first component is added before or during transesterification (step a)), components 2 and 3 are added after step a) and before or during pre-polycondensation (step b)) and the fourth component is added after step b) and before or during polycondensation (step c)).

2. The process according to claim 1, **characterized in that** the first component comprises one or more quaternary nitrogen compounds with the general structure [(R)₄-N]⁺ [X]⁻, wherein R represents independent of one another the same or different alkyl and/or aryl groups and X⁻ comprises inorganic or organic anions, in particular hydroxide, sulphate, carbonate, formate, benzoate, phenolate, wherein the first component comprises in particular one or more of the following compounds: tetramethylammonium hydroxide, tetraethylammonium hydroxide, tetrabutylammonium hydroxide, tetramethylammonium formate,
tetraethylammonium formate, tetrabutylammonium formate,
tetramethylammonium acetate, tetraethylammonium acetate,
tetrabutylammonium acetate, tetramethylammonium fluoride,
tetraethylammonium fluoride, tetrabutylammonium fluoride,
and/or
that the second component comprises one or more quaternary phosphorus compounds with the general structure [(R)₄-P]⁺ [X]⁻, wherein R represents independent of one another the same or different alkyl and/or aryl groups and X⁻comprises inorganic or organic anions, in particular hydroxide, sulphate, carbonate, formate, benzoate, phenolate, wherein the second component comprises in particular one or more of the following compounds: tetramethyl phosphonium hydroxide, tetramethyl phosphonium formate, tetramethyl phosphonium acetate, tetramethyl phosphonium benzoate, tetraethyl phosphonium hydroxide, tetraethyl phosphonium formate, tetraethyl phosphonium acetate, tetraethyl phosphonium benzoate, tetrabutyl phosphonium hydroxide, tetrabutyl phosphonium acetate, tetrabutyl phosphonium benzoate, tetraphenyl phosphonium hydroxide, tetraphenyl phosphonium acetate, tetraphenyl phosphonium phenolate, tetrabutyl phosphonium acetate, tetramethyl phosphonium tetraphenyl borohydride, tetraphenyl phosphonium bromide, tetraphenyl phosphonium tetraphenyl boranate, tetra-(p-tert.-butylphenyl)-phosphonium diphenyl phosphate, triphenylbutyl phosphonium phenolate, triphenylbutylphosphonium tetraphenylboronate, tetraphenylphosphonium chloride, tetraphenylphosphonium fluoride,
and/or
that the third component comprises one or more of the following alkali metal compounds: alkali metal hydroxide, carboxyl acids and their salts and in the form of non-volatile organic and inorganic acids and their salts, alkali metal phosphates, phosphite, sulphate, wherein the third component comprises in particular one or more of the following compounds: sodium hydroxide, potassium hydroxide, lithium hydroxide, sodium acetate, potassium acetate, lithium acetate, sodium carbonate, potassium carbonate, lithium carbonate, sodium bicarbonate, potassium bicarbonate, lithium bicarbonate, sodium methanolate, potassium methanolate, lithium methanolate, sodium ethanolate, potassium ethanolate, lithium ethanolate, sodium stearate, potassium stearate, lithium stearate, sodium phenolate, potassium phenolate, lithium phenolate, sodium bis-phenolate, potassium bis-phenolate, lithium bis-phenolate, di-sodium bis-phenolate, di-potassium bis-phenolate, di-lithium bis-phenolate, sodium benzoate, potassium benzoate, lithium benzoate, sodium borohydride, potassium borohydride, lithium borohydride, sodium amide, potassium amide, lithium amide, sodium phosphate, di-sodium hydrogen phosphate, sodium di-hydrogen phosphate, potassium phosphate, di-potassium hydrogen phosphate, potassium dihydrogen phosphate, lithium phosphate, di-lithium hydrogen phosphate, lithium dihydrogen phosphate, sodium sulphate, sodium hydrogen sulphate, sodium potassium phosphate, sodium stannates, potassium stannates.

3. The process according to at least one of the preceding claims, **characterized in that** the third component comprises a potassium salt.

4. The process according to at least one of the preceding claims, **characterized in that** the third component comprises a sodium salt and a potassium salt, in particular di-sodium bis-phenolate and di-potassium bis-phenolate.

5. The process according to at least one of the preceding claims, **characterized in that** the fourth component comprises one or more of the following sulphur-containing organic compounds: butyl p-toluenesulfonate, benzenesulfonic acid, benzenesulfonate, p-toluenesulfonic acid, p-toluenesulfonate, methyl benzenesulfonic acid, methyl benzene sulfonate, ethyl benzenesulfonate, ethyl benzenesulfonic acid, n-butyl benzenesulfonate, n-butyl benzenesulfonic acid, phenyl benzenesulfonate, phenyl benzenesulfonic acid, methyl p-toluenesulfonic acid, methyl p-toluenesulfonate, ethyl p-toluenesulfonate, ethyl-p-toluenesulfonic acid, n-butyl-p-toluenesulfonate, n-butyl toluenesulfonic acid, octyl p-toluenesulfonic acid, octyl p-toluenesulfonate, phenyl p-toluenesulfonate, phenyl p-toluenesulfonic acid, trifluoromethanesulfonate trifluoromethanesulfonic acid, naphthalenesulfonate, naphthalenesulfonic acid, dimethylsulfonate, dimethylsulfonic acid, diethylsulfonate, diethylsulfonic acid.

6. The process according to at least one of the preceding claims, **characterized in that** the first component comprises tetraethylammonium hydroxide, the second component comprises tetraphenylphosphonium phenolate, the third component comprises di-sodium bis-phenolate, and the fourth component comprises butyl p-toluene sulfonate,
and/or
**in that** the first component comprises tetraethylammonium hydroxide, the second component comprises tetraphenylphosphonium phenolate, the third component comprises a sodium compound and a potassium compound, and the fourth component comprises butyl p-toluenesulphonate,
and/or
**in that** the first component comprises tetraethylammonium hydroxide, the second component comprises tetraphenylphosphonium phenolate, the third component comprises di-potassium bis-phenolate and the fourth component comprises butyl p-toluenesulphonate.

7. The process according to at least one of the preceding claims, **characterized in that** the first component comprises tetraethylammonium hydroxide, the second component comprises tetraphenylphosphonium phenolate, the third component comprises di-sodium bis-phenolate and di-potassium bis-phenolate, and the fourth component comprises butyl p-toluenesulfonate, wherein
the di-sodium bis-phenolate is preferably used in such amounts that it is present in a target concentration of the component, based on the mass of the final polymer and the alkali metal, of about 0.005 - 2, in particular about 0.01 - about 1, preferably about 0.01 - 0.7, more preferably about 0.01 - 0,1 ppm (by mass) and that the di-potassium bis-phenolate is preferably used in such amounts that it is present in a target concentration of the component, based on the mass of the final polymer and the alkali metal, of about 0.005 - 2, in particular about 0.01 - about 1, preferably about 0.02 - 0.7, more preferably about 0.03 - 0.5 ppm (by mass).

8. The process according to at least one of the preceding claims, **characterized in that**
- the first component, preferably tetraethylammonium hydroxide, is used in an amount such that the target concentration of the component, based on the mass of the final polymer, is about 10 - 1000, in particular about 50 - 250, more preferably about 100 - 180, even more preferably about 120 - 150 ppm (by mass);
- the second component, preferably tetraphenylphosphonium phenolate, is used in such an amount that the target concentration of the component, based on the mass of the final polymer, is about 0.2 - 50, in particular about 1 - 15, more preferably about 2 - 12, still more preferably about 4 - 10 ppm (based on the mass);
- the third component, preferably di-sodium bis-phenolate, is used in an amount such that the target concentration of the component, based on the mass of the final polymer and the alkali metal, is about 0.005 - 2, in particular about 0.05 - about 1, preferably about 0.05 - 0.7, more preferably about 0.09 - 0.3 ppm (by mass);
- the fourth component, preferably butyl p-toluenesulphonate, is used in such an amount that the amount of the component is about 1.1 - 3 times, in particular about 1.5 - 2 times, the molar ratio relative to the amount of the third component of the catalyst system used,
and/or
- the first component, preferably tetraethylammonium hydroxide, is used in an amount such that the target concentration of the component, based on the mass of the final polymer, is about 10 - 1000, in particular about 50 - 250, more preferably about 100 - 180, even more preferably about 120 - 150 ppm (by mass);
- the second component, preferably tetraphenylphosphonium phenolate, is used in such an amount that the target concentration of the component, based on the mass of the final polymer, is about 0.2 - 50, in particular about 1 - 15, more preferably about 2 - 12, still more preferably about 4 - 10 ppm (based on the mass);
- the third component, preferably di-potassium bis-phenolate, is used in an amount such that the target concentration of the component, based on the mass of the final polymer and the alkali metal, is about 0.005 - 2, in particular about 0.05 - about 1, preferably about 0.05 - 0.7, more preferably about 0.09 - 0.3 ppm (by mass);
- the fourth component, preferably butyl p-toluenesulphonate, is used in such an amount that the amount of the component is about 1.1 - 3 times, in particular about 1.5 - 2 times, the molar ratio relative to the amount of the third component of the catalyst system used.

9. The process according to at least one of the preceding claims, **characterized in that** the reaction product of the polycondensation is mixed with additives.

10. The process according to at least one of the preceding claims, **characterised in that** the first component is added before or during transesterification (step a)), the second and third components are added after step a) and before or during pre-polycondensation (step b)), and the fourth component is added after step b) and before or during the addition of additives.

11. The process according to at least one of the preceding claims, **characterized in that** dihydroxydiarylalkanes of the formula HO-Z-OH are used as aromatic hydroxy compound, wherein Z is a divalent organic radical having 6 to 30 carbon atoms and containing one or more aromatic groups,
and/or
that di-(C₆ to C₁₄-aryl)-carbonate esters are used as diaryl carbonate,
and/or
that bisphenol A is used as the aromatic hydroxy compound and diphenyl carbonate as the diaryl carbonate.

12. The process according to at least one of the preceding claims, **characterized in that** one or more additive(s) are added in a polycarbonate main stream,
or
**in that** one or more additive(s) are added in a polycarbonate side stream, wherein
the addition of additives is preferably performed with an extruder.

13. A catalyst combination, in particular for use in a process for the preparation of polycarbonate, which comprises:
- a first component comprising one or more quaternary nitrogen compounds,
- a second component comprising one or more quaternary phosphorus compounds,
- a third component comprising one or more alkali metal compounds and
- a fourth component comprising one or more sulphur-containing organic compounds,
wherein the third component comprises di-sodium bis-phenolate and di-potassium bis-phenolate.

14. The catalyst combination according to claim 13, wherein the first component is as defined in claim 2 and/or the second component is as defined in claim 2 and/or the fourth component is as defined in claim 5,
wherein it is preferred that the first component comprises tetraethylammonium hydroxide, the second component comprises tetraphenylphosphonium phenolate and the fourth component comprises butyl p-toluene sulphonate.

15. Use of a catalyst combination according to at least one of claims 13 to 14 in a process for the preparation of polycarbonate.

## Revendications

1. Procédé de production d'un polycarbonate par réaction d'un ou de plusieurs diarylcarbonates avec un ou plusieurs composés hydroxy aromatiques, une combinaison de catalyseurs étant mise en œuvre dans ledit procédé, laquelle comprend :
- un premier composant, comprenant un ou plusieurs composés d'azote quaternaires,
- un deuxième composant, comprenant un ou plusieurs composés de phosphore quaternaires,
- un troisième composé, comprenant un ou plusieurs composés de métal alcalin et
- un quatrième composé, comprenant un ou plusieurs composés organiques soufrés,
ledit procédé comprenant au moins les étapes suivantes consistant à :
a) estérifier un ou plusieurs diarylcarbonates avec un ou plusieurs composés hydroxy aromatiques dans au moins un réacteur d'estérification,
b) pré-polycondenser le produit réactionnel de l'estérification dans au moins un réacteur de pré-polycondensation,
c) la polycondensation du produit réactionnel de pré-polycondensation dans au moins un réacteur de polycondensation,
**caractérisé en ce que** le premier composant est ajouté avant ou pendant l'estérification (étape a)), les composants 2 et 3 sont ajoutés après l'étape a) et avant ou pendant la pré-polycondensation (étape b)) et le quatrième composant est ajouté après l'étape b) et avant ou pendant la polycondensation (étape c)).

2. Procédé selon la revendication 1, **caractérisé en ce que** le premier composant comprend un ou plusieurs composés d'azote quaternaires ayant la structure générale [(R)₄-N]⁺[X⁻], dans laquelle R représente des groupes alkyle et/ou aryle différents ou identiques, indépendants les uns des autres, et X⁻ représente des anions inorganiques ou organiques, en particulier hydroxyde, sulfate, carbonate, formiate, benzoate, phénolate, le premier composant comprenant en particulier un ou plusieurs des composés suivants : hydroxyde de tétraméthylammonium, hydroxyde de tétraéthylammonium, hydroxyde de tétrabutylammonium, formiate de tétraméthylammonium, formiate de tétraéthylammonium, formiate de tétrabutylammonium, acétate de tétraméthylammonium, acétate de tétraéthylammonium, acétate de tétrabutylammonium, fluorure de tétraméthylammonium, fluorure de tétraéthylammonium, fluorure de tétrabutylammonium,
et/ou
le deuxième composant comprend un ou plusieurs composés de phosphore quaternaires ayant la structure générale [(R)₄-P]⁺[X⁻], dans laquelle R représente des groupes alkyle et/ou aryle différents ou identiques, indépendants les uns des autres, et X⁻ représente des anions inorganiques ou organiques, en particulier hydroxyde, sulfate, carbonate, formiate, benzoate, phénolate, le deuxième composant comprenant en particulier un ou plusieurs des composés suivants : hydroxyde de tétraméthylphosphonium, formiate de tétraméthylphosphonium, acétate de tétraméthylphosphonium, benzoate de tétraméthylphosphonium, hydroxyde de tétraéthylphosphonium, formiate de tétraéthylphosphonium, acétate de tétraéthylphosphonium, benzoate de tétraéthylphosphonium, hydroxyde de tétrabutylphosphonium, acétate de tétrabutylphosphonium, benzoate de tétrabutylphosphonium, hydroxyde de tétraphénylphosphonium, acétate de tétraphénylphosphonium, phénolate de tétraphénylphosphonium, acétate de tétrabutylphosphonium, tétraphénylborohydrure de tétraméthylphosphonium, bromure de tétraphénylphosphonium, tétraphénylboranate de tétraphénylphosphonium, diphénylphosphate de tétra-(p-tert.-butylphényl)-phosphonium, phénolate de triphénylbutylphosphonium, tétraphénylboranate de triphénylbutylphosphonium, chlorure de tétraphénylphosphonium, fluorure de tétraphénylphosphonium, et/ou
le troisième composant comprend un ou plusieurs des composés de métal alcalin suivants : hydroxyde de métal alcalin, acides carboxyliques de métal alcalin et leurs sels ainsi que sous forme d'acides organiques et inorganiques non volatiles et leurs sels, phosphates, phosphite, sulfate de métal alcalin, le troisième composant comprenant en particulier un ou plusieurs des composés suivants : hydroxyde de sodium, hydroxyde de potassium, hydroxyde de lithium, acétate de sodium, acétate de potassium, acétate de lithium, carbonate de sodium, carbonate de potassium, carbonate de lithium, bicarbonate de sodium, bicarbonate de potassium, bicarbonate de lithium, méthanolate de sodium, méthanolate de potassium, méthanolate de lithium, éthanolate de sodium, éthanolate de potassium, éthanolate de lithium, stéarate de sodium, stéarate de potassium, stéarate de lithium, phénolate de sodium, phénolate de potassium, phénolate de lithium, bisphénolate de sodium, bisphénolate de potassium, bisphénolate de lithium, bisphénolate de di-sodium, bisphénolate de di-potassium, bisphénolate de di-lithium, benzoate de sodium, benzoate de potassium, benzoate de lithium, borohydrure de sodium, borohydrure de potassium, borohydrure de lithium, amide de sodium, amide de potassium, amide de lithium, phosphate de sodium, hydrogénophosphate de di-sodium, dihydrogénophosphate de sodium, phosphate de potassium, hydrogénophosphate de di-potassium, dihydrogénophosphate de potassium, phosphate de lithium, hydrogénophosphate de di-lithium, dihydrogénophosphate de lithium, sulfate de sodium, hydrogénosulfate de sodium, phosphate de sodium-potassium, stannate de sodium, stannate de potassium.

3. Procédé selon au moins l'une des revendications précédentes, **caractérisé en ce que** le troisième composant comprend un sel de potassium.

4. Procédé selon au moins l'une des revendications précédentes, **caractérisé en ce que** le troisième composant comprend un sel de sodium et un sel de potassium, en particulier le bis-phénolate de di-sodium et le bisphénolate de di-potassium.

5. Procédé selon au moins l'une des revendications précédentes, **caractérisé en ce que** le quatrième composant comprend un ou plusieurs des composés organiques soufrés suivants : butyl-p-toluènesulfonate, acide benzènesulfonique, benzènesulfonate, acide p-toluènesulfonique, p-toluènesulfonate, acide méthylbenzènesulfonique, méthylbenzènesulfonate, éthylbenzènesulfonate, acide éthylbenzènesulfonique, n-butylbenzènesulfonate, acide n-butylbenzènesulfonique, phénylbenzènesulfonate, acide phénylbenzènesulfonique, acide méthyl-p-toluènesulfonique, méthyl-p-toluènesulfonate, éthyl-p-toluènesulfonate, acide éthyl-p-toluènesulfonique, n-butyl-p-toluènesulfonate, acide n-butyl-toluènesulfonique, acide octyl-p-toluènesulfonique, octyl-p-toluènesulfonate, phényl-p-toluènesulfonate, acide phényl-p-toluènesulfonique, triflorométhanesulfonate, acide trifluorométhanesulfonique, naphtalènesulfonate, acide naphtalènesulfonique, diméthylsulfonate, acide diméthylsulfonique, diéthylsulfonate, acide diéthylsulfonique.

6. Procédé selon au moins l'une des revendications précédentes, **caractérisé en ce que** le premier composant comprend de l'hydroxyde de tétraéthylammonium, le deuxième composant comprend du phénolate de tétraphénylphosphonium, le troisième composant comprend du bis-phénolate de di-sodium et le quatrième composant comprend du butyl-p-toluènesulfonate,
et/ou
le premier composant comprend de l'hydroxyde de tétraéthylammonium, le deuxième composant comprend du phénolate de tétraphénylphosphonium, le troisième composant comprend un composé de sodium et un composé de potassium et le quatrième composant comprend du butyl-p-toluènesulfonate,
et/ou
le premier composant comprend de l'hydroxyde de tétraéthylammonium, le deuxième composant comprend du phénolate de tétraphénylphosphonium, le troisième composant comprend du bis-phénolate de di-potassium et le quatrième composant comprend du butyl-p-toluènesulfonate.

7. Procédé selon au moins l'une des revendications précédentes, **caractérisé en ce que** le premier composant comprend de l'hydroxyde de tétraéthylammonium, le deuxième composant comprend du phénolate de tétraphénylphosphonium, le troisième composant comprend du bis-phénolate de di-sodium et du bis-phénolate de di-potassium et le quatrième composant comprend du butyl-p-toluènesulfonate,
le bis-phénolate de di-sodium étant de préférence mis en œuvre en de telles quantités qu'il est présent en une concentration cible du composant, par rapport à la masse du polymère final et du métal alcalin, d'environ 0,005 à 2, en particulier d'environ 0,01 à environ 1, de préférence d'environ 0,01 à 0,7, de manière mieux préférée d'environ 0,01 à 0,1 ppm (par rapport à la masse) et le bis-phénolate de di-potassium étant de préférence mis en œuvre en de telles quantités qu'il est présent en une concentration cible du composant, par rapport à la masse du polymère final et du métal alcalin, d'environ 0,005 à 2, en particulier d'environ 0,01 à environ 1, de préférence d'environ 0,02 à 0,7, de manière mieux préférée d'environ 0,03 à 0,5 ppm (par rapport à la masse).

8. Procédé selon au moins l'une des revendications précédentes, **caractérisé en ce que**
- le premier composant, de préférence l'hydroxyde de tétraéthylammonium, est mis en œuvre en une telle quantité que la concentration cible du composant, par rapport à la masse du polymère final, est d'environ 10 à 1000, en particulier d'environ 50 à 250, de manière mieux préférée d'environ 100 à 180, de manière encore mieux préférée d'environ 120 à 150 ppm (par rapport à la masse) ;
- le deuxième composant, de préférence le phénolate de tétraphénylphosphonium, est mis en œuvre en une telle quantité que la concentration cible du composant, par rapport à la masse du polymère final, est d'environ 0,2 à 50, en particulier d'environ 1 à 15, de manière mieux préférée d'environ 2 à 12, de manière encore mieux préférée d'environ 4 à 10 ppm (par rapport à la masse) ;
- le troisième composant, de préférence le bisphénolate de di-sodium, est mis en œuvre en une telle quantité que la concentration cible du composant, par rapport à la masse du polymère final et du métal alcalin, est d'environ 0,005 à 2, en particulier d'environ 0,05 à environ 1, de préférence d'environ 0,05 à 0,7, de manière mieux préférée d'environ 0,09 à 0,3 ppm (par rapport à la masse) ;
- le quatrième composant, de préférence le butyl-p-toluènesulfonate, est mis en œuvre en une telle quantité que la quantité du composant est d'environ 1,1 à 3 fois, en particulier d'environ 1,5 à 2 fois le rapport molaire par rapport à la quantité mise en œuvre du troisième composant du système de catalyseurs,
et/ou
- le premier composant, de préférence l'hydroxyde de tétraéthylammonium, est mis en œuvre en une telle quantité que la concentration cible du composant, par rapport à la masse du polymère final, est d'environ 10 à 1000, en particulier d'environ 50 à 250, de manière mieux préférée d'environ 100 à 180, de manière encore mieux préférée d'environ 120 à 150 ppm (par rapport à la masse) ;
- le deuxième composant, de préférence le phénolate de tétraphénylphosphonium, est mis en œuvre en une telle quantité que la concentration cible du composant, par rapport à la masse du polymère final, est d'environ 0,2 à 50, en particulier d'environ 1 à 15, de manière mieux préférée d'environ 2 à 12, de manière encore mieux préférée d'environ 4 à 10 ppm (par rapport à la masse) ;
- le troisième composant, de préférence le bisphénolate de di-potassium, est mis en œuvre en une telle quantité que la concentration cible du composant, par rapport à la masse du polymère final et du métal alcalin, est d'environ 0,005 à 2, en particulier d'environ 0,05 à environ 1, de préférence d'environ 0,05 à 0,7, de manière mieux préférée d'environ 0,09 à 0,3 ppm (par rapport à la masse) ;
- le quatrième composant, de préférence le butyl-p-toluènesulfonate, est mis en œuvre en une telle quantité que la quantité du composant est d'environ 1,1 à 3 fois, en particulier d'environ 1,5 à 2 fois le rapport molaire par rapport à la quantité mise en œuvre du troisième composant du système de catalyseurs.

9. Procédé selon au moins l'une des revendications précédentes, **caractérisé en ce que** le produit réactionnel de la polycondensation est mélangé avec des additifs.

10. Procédé selon au moins l'une des revendications précédentes, **caractérisé en ce que** le premier composant est ajouté avant ou pendant l'estérification (étape a)), les deuxième et troisième composants sont ajoutés après l'étape a) et avant ou pendant la pré-polycondensation (étape b)) et le quatrième composant est ajouté après l'étape b) et avant ou pendant l'addition des additifs.

11. Procédé selon au moins l'une des revendications précédentes, **caractérisé en ce que** des dihydroxydiarylalcanes de formule HO-Z-OH sont utilisés comme composant hydroxy aromatique, Z étant un radical organique divalent ayant 6 à 30 atomes de carbone, lequel contient un ou plusieurs groupes aromatiques,
et/ou
**en ce qu'**un ester d'acide di- (aryle en C₆ à C₁₄) - carboxylique est utilisé comme diarylcarbonate,
et/ou
**en ce que** le bisphénol A est utilisé comme composé hydroxy aromatique et le diphénylcarbonate est utilisé comme diarylcarbonate.

12. Procédé selon au moins l'une des revendications précédentes, **caractérisé en ce qu'**un ou plusieurs additifs sont ajoutés dans un courant principal de polycarbonate,
ou **en ce qu'**un ou plusieurs additifs sont ajoutés dans un courant secondaire de polycarbonate,
l'addition d'additifs s'effectuant de préférence avec une extrudeuse.

13. Combinaison de catalyseurs, en particulier pour l'utilisation dans un procédé de production de polycarbonate, qui comprend :
- un premier composant, comprenant un ou plusieurs composés d'azote quaternaires,
- un deuxième composant, comprenant un ou plusieurs composés de phosphore quaternaires,
- un troisième composé, comprenant un ou plusieurs composés de métal alcalin et
- un quatrième composé, comprenant un ou plusieurs composés organiques soufrés,
le troisième composant comprenant du bis-phénolate de di-sodium et du bis-phénolate de di-potassium.

14. Combinaison de catalyseurs selon la revendication 13, dans laquelle le premier composant est tel que défini dans la revendication 2 et/ou le deuxième composant est tel que défini dans la revendication 2, et/ou le quatrième composant est tel que défini dans la revendication 5,
tout en préférant que le premier composant comprenne de l'hydroxyde de tétraéthylammonium, le deuxième composant comprenne du phénolate de tétraphénylphosphonium et le quatrième composant comprenne du butyl-p-toluènesulfonate.

15. Utilisation d'une combinaison de catalyseurs selon au moins l'une des revendications 13 à 14 dans un procédé de production de polycarbonate.
